# EUROPEAN PATENT APPLICATION

(11) **EP 1 710 855 A2**
(43) Date of publication of application: **11.10.2006**
(21) Application number: 05020498.1
(22) Date of filing: 20.09.2005
(51) Int. Cl.: H01M 4/02, H01M 10/40, H01M 4/36, H01M 4/58, H01M 4/48

(54) **Negative electrode for non-aqueous secondary battery**

(30) Priority: 02.03.2005 US 70419
(71) Applicant: Matsushita Electrical Industrial Co., Ltd, Osaka 571-8501 (JP)
(72) Inventor: Koshina, Hizuru, Palo Alto CA 94301-1200 (US)
(74) Representative: Schwabe - Sandmair - Marx

(57) **Abstract**

Non-aqueous secondary batteries, comprising an electrode active material that has the overall composition LiₓM¹M²S_{3-y}O_{y}, in which 0≤X≤2, 0≤y≤3; M¹ is selected from the group consisting of alkali metals exclusive of lithium, alkaline earth metals, semi-metals, and mixtures thereof; and M² is selected from the group consisting of (i) metals exclusive of the alkali metals, the alkaline earth metals, and the semi-metals, and (ii) mixtures thereof, are disclosed. These batteries have improved reliability and safety.

## Description

### FIELD OF THE INVENTION

The present invention relates to non-aqueous secondary batteries and more particularly to improvements of the negative electrode performance.

### BACKGROUND OF THE INVENTION

In recent years, electronic information devices, such as personal computers, cell phones, and personal digital assistants (PDA), as well as audio-visual electronic devices, such as video camcorders and mini-disc players, are rapidly becoming smaller, lighter in weight, and cordless. Secondary batteries having high energy density are increasingly in high demand as power sources these electronic devices. Therefore, non-aqueous electrolyte secondary batteries, having higher energy density than obtainable by conventional lead-acid batteries, nickel-cadmium storage batteries, or nickel-metal hydride storage batteries, have come into general use. Among non-aqueous electrolyte secondary batteries, lithium-ion secondary batteries, and lithium-ion polymer secondary batteries are under advanced development.

A carbon material capable of absorbing and desorbing lithium has been used as the negative electrode active material in these batteries. Typical carbon materials are artificial graphite, natural graphite, baked mesophase carbons made from coal pitch or petroleum pitch, non-graphitizable carbons made by further baking those baked carbons in the presence of oxygen, and non-graphitizable carbons comprising baked bodies of oxygen-containing plastics. The carbon material is mixed with a binder and the like to be used as a negative electrode material mixture. The negative electrode material mixture is applied on a current collector sheet made of a copper foil or compression-molded on a sealing plate or in a battery case, which is made of iron or nickel, to produce a negative electrode.

When a graphite material is used as the negative electrode active material, lithium is released at an average potential of about 0.2 V. Because this potential is low compared to non-graphite carbon, graphite carbon has been used in applications where high voltage and voltage flatness are desired. However, the capacity per unit volume of the graphite material is as small as 838 mAh/cm³, and this capacity cannot be expected to further increase.

Negative electrode active materials showing high capacity include simple substances such as silicon and tin and oxides of those substances, which are capable of absorbing and desorbing lithium. See, for example, Japanese Laid-Open Patent Publication No. 2001-220124. However, when these materials absorbs lithium ions, the crystal structure thereof varies and the volume increases. This may cause cracking of a particle, separation of a particle from the current collector, or the like, so that materials have the disadvantage of a short charge/discharge cycle life. In particular, the cracking of the particle causes an increase in reaction between the non-aqueous electrolyte and the active material, to form a film on the particle. This causes interface resistance to increase, reducing the charge/discharge cycle life of the battery.

When the battery case has low strength, such as a prismatic case made of aluminum or iron, or an exterior component which is made of an aluminum foil having a resin film on each face thereof (i.e., an aluminum laminate sheet), the battery thickness increases due to volume expansion of the negative electrode, such that an instrument storing the battery could be damaged. In a cylindrical battery using a battery case with high strength, because the separator between a positive electrode and a negative electrode is strongly compressed due to volume expansion of the negative electrode, an electrolyte-depleting region is created between the positive electrode and the negative electrode, thereby making the battery life even shorter.

Expansion per volume of the negative electrode can be reduced by blending nickel silicide (NiSi₂), zinc, cadmium or the like, which are capable of absorbing a zero or small amount of lithium, into a material capable of absorbing lithium. However, such blending is not an effective measure against the increase in volume because the amount of lithium absorbed in the entire electrode plate, i.e. charging capability, decreases.

On the other hand, useful oxide materials in oxide, especially, lithium titanium oxide (Li₄Ti₅O₁₂), are well-known materials with a non-expansion during lithium absorbing and desorbing. But this material has a potential of 1.55V at lithium desorbing and about 610mAh/cm³ as volumetric capacity. As an anode material, Li₄Ti₅O₁₂ has a cathodic desorbing potential and smaller volumetric capacity than graphite.

Also, Japanese patent publication H06-275269 (Tahara, U.S. Pat. No. 5,401,599) discloses that RMO₃ materials with a perovskite crystal structure and LiₓRMO₃ which is lithiated RMO₃, are suitable as negative electrode active materials. RMO₃ and LiₓRMO₃ materials shows lower potentials than Li₄Ti₅O₁₂. However, in general, perovskite structures are oxygen deficient. This makes it easy for materials with this crystal structure to generate gas in the battery cell by decomposing the electrolyte at high temperatures.

Gas evolution and self-heating can the damage the electronic device. Therefore, a need exists for a negative electrode for a non-aqueous secondary battery that provides improved performance with respect to gas evolution and self-heating.

### SUMMARY OF THE INVENTION

In one aspect, the invention is a negative electrode for a non-aqueous secondary battery that provides improved performances with respect to gas evolution and self-heating. The negative electrode comprises:
a current collector; and
a mixture comprising a negative electrode active material, a conductive material, and a binder on the current collector;
in which:
   the negative electrode active material has the overall composition:

      LiₓM¹M²S_{3-y}O_{y};

      0≤X≤2, 0≤y≤3;
   M¹ is selected from the group consisting of alkali metals exclusive of lithium, alkaline earth metals, semi-metals, and mixtures thereof; and
   M² is selected from the group consisting of (i) metals exclusive of the alkali metals, the alkaline earth metals, and the semi-metals, and (ii) mixtures thereof.

In another aspect, the invention is a non-aqueous electrolyte secondary battery comprising the negative electrode.

### BRIEF DESCRIPTION OF THE DRAWING

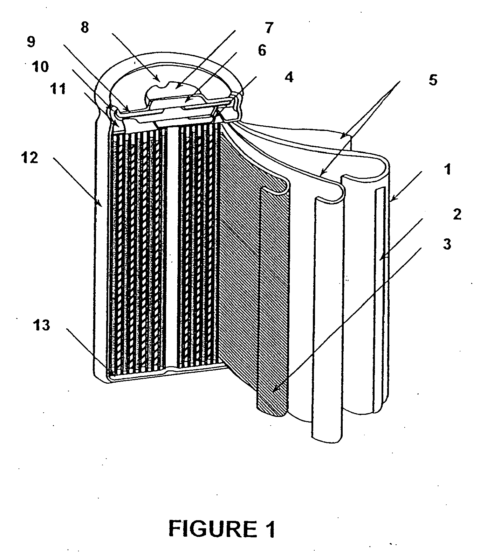

Figure 1 is a schematic drawing of a non-aqueous electrolyte secondary battery.

### DETAILED DESCRIPTION OF THE INVENTION

Unless the context indicates otherwise, in the specification and claims, the terms M¹, M², binder, conductive material, negative electrode active material, positive electrode active material, lithium salt, non-aqueous solvent, additive, and similar terms also include mixtures of such materials. Unless otherwise specified, all percentages are percentages by weight and all temperatures are in degrees Centigrade (degrees Celsius).

Referring to Figure 1, the non-aqueous secondary battery comprises negative electrode 1, negative lead tab 2, positive electrode 3, positive lead tab 4, separator 5, safety vent 6, top 7, exhaust hole 8, PTC (positive temperature coefficient) device 9, gasket 10, insulator 11, battery case or can 12, and insulator 13. Although the non-aqueous secondary battery is illustrated as cylindrical structure, any other shape, such as prismatic, aluminum pouch, or coin type may be used.

### Negative Electrode

Negative electrode 1 comprises a current collector and, on the current collector, a mixture comprising a negative electrode active material, a conductive material, and a binder.

The current collector can be any conductive material that does not chemically change within the range of charge and discharge electric potentials used. Typically, the current collector is a metal such as copper, nickel, iron, titanium, or cobalt; an alloy comprising at least one of these metals such as stainless steel; or copper or stainless steel surface-coated with carbon, nickel or titanium. The current collector may be, for example, a film, a sheet, a mesh sheet, a punched sheet, a lath form, a porous form, a foamed form, a fibrous form, or, preferably, a foil. A foil of copper or a copper alloy, or a foil having a copper layer deposited on its surface by, for example electrolytic deposition, is preferred. The current collector is typically about 1-500 µm thick. It may also be roughened to a surface roughness of Ra is 0.2 µm or more to improved adhesion of the mixture of the negative electrode active material, the conductive material, and the binder to the current collector.

The negative electrode active material has the overall composition:

LiₓM¹M²S_{3-y}O_{y}.

M¹ is selected from the group consisting of alkali metals exclusive of lithium, alkaline earth metals, semi-metals, and mixtures thereof. Alkali metals exclusive of lithium (Li) include, for example, sodium (Na), potassium (K), and cesium (Cs). Alkaline earth metals include, for example, beryllium (Be), magnesium (Mg), calcium (Ca), strontium (Sr) and barium (Ba). Semi-metals or metalloids, include, for example, silicon (Si), geranium (Ge), tin (Sn), lead (Pb), arsenic (As), antimony (Sb), bismuth (Bi), selenium (Se), and tellurium (Te). M¹ is typically calcium, tin, lead, or a mixture thereof.

M² is selected from the group consisting of (i) metals exclusive of the alkali metals, the alkaline earth metals, and the semi-metals, and (ii) mixtures thereof. M² may be, for example, selected from the group consisting of titanium (Ti), vanadium (V), chromium (Cr), manganese (Mn), iron (Fe), cobalt (Co), nickel (Ni), copper (Cu), zirconium (Zr), niobium (Nb), molybdenum (Mo), tin (Sn), lead (Pb), zinc (Zn), cadmium (Cd), and mixtures thereof. Lanthanides, such as lanthanum (La), may also be used. M² is typically titanium, niobium, vanadium, or a mixture thereof.
0≤X≤2; 0≤y<3.

Though not being bound by any theory of explanation, it is believed that in these compounds the sulfur is either on the surface of the oxide particles and/or exchanges partially for the oxygen in the perovskite crystal lattice.

The negative electrode active material may be a single material that has the indicated composition. Alternatively, it may be a mixture of material that has the indicated overall composition. Negative electrode active materials such as SnTiS₃, PbTiS₃, PbNbS₃ can be prepared by heating a sulfide of M¹, a sulfide of M², and a small amount of sulfur together under vacuum. Negative electrode active materials such as PbTiS_{3-Y}O_{Y} can be prepared by heating a the corresponding oxide, for example PbTiO₃, with sulfur in a vacuum. A mixture of materials with the overall composition LiₓM¹M²S_{3-y}O_{y}, in which 0≤X≤2; 0≤y<3, for example an oxygen containing compound such as CaTiO₃ SnTiO₃, PbTiO₃, PbNbO₃ or a mixture thereof, with a sulfur containing compound, such as SnTiS₃, PbTiS₃, SnNbS₃, PbNbS₃, or a mixture thereof, can also be used as the negative electrode active material. Alternatively, the negative electrode active material can be prepared by hybridization of two material for example an oxygen containing compound with a sulfur containing compound such as are described above, using hybridization equipment.

At least part of the surface of the negative electrode active material is covered a with a conductive material. Any conductive material know in the art can be used. Typical conductive materials include carbon, such as graphite, for example, natural graphite (scale-like graphite), synthetic graphite, and expanding graphite; carbon black, such as acetylene black, KETZEN® black (highly structured furnace black), channel black, furnace black, lamp black, and thermal black; conductive fibers such as carbon fibers and metallic fibers; metal powders such as copper and nickel; organic conductive materials such as polyphenylene derivatives; and mixtures thereof. Synthetic graphite, acetylene black, and carbon fibers are preferred.

The binder for the negative electrode can be either a thermoplastic resin or a thermosetting resin. Useful binders include: polyethylene, polypropylene, polytetrafluoroethylene (PTFE), polyvinylidene fluoride (PVDF), styrene/butadiene rubber, tetrafluoroethylene/hexafluoropropylene copolymers (FEP), tetrafluoroethylene/perfluoro-alkyl-vinyl ether copolymers (PFA), vinylidene fluoride/hexafluoropropylene copolymers, vinylidene fluoride/chlorotrifluoroethylene copolymers, ethylene/tetrafluoroethylene copolymers (ETFE), polychlorotrifluoroethylene (PCTFE), vinylidene fluoride/pentafluoropropylene copolymers, propylene/tetrafluoroethylene copolymers, ethylene/chlorotrifluoroethylene copolymers (ECTFE), vinylidene fluoride/hexafluoropropylene/tetrafluoroethylene copolymers, vinylidene fluoride/perfluoromethyl vinyl ether/tetrafluoroethylene copolymers, and mixtures thereof. Polytetrafluoroethylene and polyvinylidene fluoride are preferred binders.

The negative electrode may be prepared by mixing the negative electrode active material, the binder, and the conductive material with a solvent, such as N-methyl pyrrolidone. The resulting paste or slurry is coated onto the current collector by any conventional coating method, such bar coating, gravure coating, die coating, roller coating, or doctor knife coating. Typically, the current collector is dried to remove the solvent and then rolled under pressure after coating. The mixture of negative electrode active material, binder, and conductive material typically comprises the negative electrode active material, at least enough conductive material for good conductivity, and at least enough binder to hold the mixture together. The negative electrode active material may typically comprise from about 1 wt% to about 99 wt% of the mixture of negative electrode active material, binder, and conductive material.

### Positive Electrode

Positive electrode 3 typically comprises a current collector and, on the current collector, a mixture comprising a positive electrode active material, a conductive material, and a binder. Typical current collectors, conductive materials, and binders for the positive electrode include the current collectors, conductive materials, and binders described above for the negative electrode.

The positive electrode active material may any compound containing lithium that is capable of occluding and of releasing lithium ions (Li⁺). A transition metal oxide, with an average discharge potential in the range of 3.5 to 4.0 V with respect to lithium, has typically been used. As the transition metal oxide, lithium cobalt oxide (LiCoO₂), lithium nickel oxide (LiNiO₂), lithium manganese oxide (LiMn₂O₄), a solid solution material (LiCoₓNiyMn_{z}O₂, Li(CoₐNi_{b}Mn_{c})₂O₄) with a plurality of transition metals introduced thereto, and the like, have been used. The average diameter of particles of the positive electrode active material is preferably about 1-30 µm.

The positive electrode can be prepared by mixing the positive electrode active material, the binder, and the conductive material with a solvent and coating the resulting slurry on the current collector as was described for preparation of the negative electrode.

In the non-aqueous electrolyte secondary battery, preferably at least the surface of the negative electrode having the mixture comprising the negative electrode material is facing the surface of the positive electrode having the mixture comprising the positive electrode material.

### Non-Aqueous Electrolyte and Separator

The non-aqueous electrolyte is typically capable of withstanding a positive electrode that discharges at a high potential of 3.5 to 4.0 V and also capable of withstanding a negative electrode that charges and discharges at a potential close to lithium. The non-aqueous electrolyte comprises a non-aqueous solvent, or mixture of non-aqueous solvent, with a lithium salt, or a mixture of lithium salts, dissolved therein.

Typical non-aqueous solvents include, for example, cyclic carbonates as ethylene carbonate (EC), propylene carbonate (PC), dipropylene carbonate (DPC), butylene carbonate (BC), vinylene carbonate (VC), phenyl ethylene carbonate (ph-EC), and vinyl ethylene carbonate (VEC); open chain carbonates as dimethyl carbonate (DMC), diethyl carbonate (DEC), ethylmethyl carbonate (EMC); amides, such as formamide, acetamide, and N,N-dimethyl formamide; aliphatic carboxylic acid esters such as methyl formate, ethyl formate, methyl acetate, ethyl acetate, methyl propionate and ethyl propionate; diethers, such as 1,2-dimethoxyethane (DME), 1,2-diethoxyethane (DEE), and ethoxymethoxyethane (EME); cyclic ethers such as tetrahydrofuran, 2-methyl tetrahydrofuran, and dioxane; other aprotic organic solvents, such as acetonitrile, dimethyl sulfoxide, 1,3-propanesulton (PS) and nitromethane; and mixtures thereof. Typical lithium salts include, for example, lithium chloride (LiCl), lithium bromide (LiBr), lithium trifluoromethyl acetate (LiCF₃CO₂), lithium hexafluorophosphate (LiPF₆), lithium perchlorate (LiClO₄), lithium tetrafluoroborate (LiBF₄), lithium trifluoro-methansulfonate (LiCF₃SO₃), lithium hexafluoroarsenate (LiAsF₆), bis(trifluoromethyl)sulfonylimido lithium [LiN(CF₃SO₂)₂], lithium bisoxalato borate (LiB(C₂O₄)₂), and mixtures thereof.

Preferably, the non-aqueous electrolyte is one obtained by dissolving lithium hexafluoro phosphate (LiPF₆) in a mixed solvent of ethylene carbonate (EC), which has a high dielectric constant, and a linear carbonate or mixture of linear carbonates that are low-viscosity solvents, such as, for example, diethyl carbonate (DEC), dimethyl carbonate (DMC), ethyl methyl carbonate (EMC). The concentration of lithium ion in the non-aqueous electrolyte is typically about 0.2 mol/I to about 2 mol/I, preferably about 0.5 mol/I to about 1.5 mol/I.

Other compounds may be added to the non-aqueous electrolyte in order to improve discharge and charge/discharge properties. Such compounds include triethyl phosphate, triethanolamine, cyclic ethers, ethylene diamine, pyridine, triamide hexaphosphate, nitrobenzene derivatives, crown ethers, quaternary ammonium salts, and ethylene glycol di-alkyl ethers.

Separator 5 is insoluble and stable in the electrolyte solution. It prevents short circuits by insulating the positive electrode from the negative electrode. Insulating thin films with fine pores, which have a large ion permeability and a predetermined mechanical strength, are used. Polyolefins, such as polypropylene and polyethylene, and fluorinated polymers such as polytetrafluoroethylene and polyhexafluoropropylene, can be used individually or in combination. Sheets, nonwovens and wovens made with glass fiber can also be used. The diameter of the fine pores of the separators is typically small enough so that positive electrode materials, negative electrode materials, binders, and conductive materials that separate from the electrodes can not pass through the separator. A desirable diameter is, for example, 0.01-1 µm. The thickness of the separator is generally 10-300 µm. The porosity is determined by the permeability of electrons and ions, material and membrane pressure, in general however, it is desirably 30-80%.

For polymer secondary batteries, gel electrolytes comprising these non-aqueous electrolytes retained in the polymer as plasticizers, have also been used. Alternatively, the electrolyte may be polymer solid electrolyte or gel polymer electrolyte, which comprises a polymer solid electrolyte mixed with organic solvent provided as a plasticizer. Effective organic solid electrolytes include polymer materials such as derivatives, mixtures and complexes of polyethylene oxide, polypropylene oxide, polyphosphazene, polyaziridine, polyethylene sulfide, polyvinyl alcohol, polyvinylidene fluoride, polyhexafluoropropylene. Among inorganic solid electrolytes, lithium nitrides, lithium halides, and lithium oxides are well known. Among them, Li₄SiO₄, Li₄SiO₄-LiI-LiOH, xLi₃PO₄-(1-x)Li₄SiO₄, Li₂SiS₃, Li₃PO₄-Li₂S-SiS₂ and phosphorus sulfide compounds are effective. When a gel electrolyte is used, a separator is typically not necessary.

The positive electrode, the negative electrode, and the electrolyte are contained in a battery case or can. The case may be made of example, titanium, aluminum, or stainless steel that is resistant to the electrolyte. As shown in Figure 1, the a non-aqueous secondary battery may also comprise lead tabs, safety vents, insulators, and other structures.

### Industrial Applicability

This invention provides a negative electrode for a non-aqueous secondary battery and a non-aqueous secondary battery of high reliability and safety. These non-aqueous secondary batteries are used in portable electronic devices such as personal computers, cell phones and personal digital assistants, as well as audio-visual electronic devices, such as video camcorders and mini-disc players.

The advantageous properties of this invention can be observed by reference to the following examples, which illustrate but do not limit the invention.

### EXAMPLES

### Preparation of the Negative Electrode Active Materials

Negative active materials such as SnTiS₃, PbTiS₃, PbNbS₃ were synthesized by the following procedure. To prepare SnTiS₃, tin sulfide, titanium sulfide and a small amount of sulfur was mixed well and placed in a crystal glass tube. The glass tube was sealed under vacuum and heated at 750°C for 5 hr. PbTiS₃ and PbNbS₃ were synthesized by the same method.

PbTiO₃, CaTiO₃ and SnTiO₃ were prepared from TiO₂ and PbCO₃, CaCO₃, and SnCO₃ respectively. PbTiO₃ was prepared by heating a mixture of TiO₂ and PbCO₃ at 800°C for 5 hr in air. CaTiO₃ and SnTiO₃ were prepared by same method.

### Preparation of Batteries

The batteries were prepared by the following procedure. Figure 1 shows schematic drawing of a battery of the invention. The cell dimensions were 17 mm in diameter and 50 mm in height. Cell capacity was about 600 mAh, estimated from the positive electrode.

Negative electrode 1 of this invention was produced by the following procedure. At first, the negative electrode active material(s), carbon black as a conductive material, polyvinyl difluoride (or polyfluoro vinylidene) (PVdF) binder, and N-methyl pyrollidone (NMP) solvent were mixed well. The weight ratio of negative electrode active material to conductive material to binder was 100:10:5 (when the binder was PVdF). The resulting mixture was coated both sides of a 10 micrometer thick copper foil with a doctor blade, dried at 80°C for 4 hr, and calendared to a thickness of 150 micrometer.

Positive electrode 3 comprises lithium cobalt oxide (LiCoO₂) as the positive electrode active material, acetylene black as the conductive material, PVdF as the binder, and aluminum foil as the current collector. PVdF was used as 10% NMP solution. The weight ratio of positive electrode active material to conductive material to binder was 100:3:4 after drying. These materials were mixed well, and the resulting paste coated on both sides of aluminum foil of 15micrometer thickness, dried at 80°C for 4 hr, and calendared to a thickness 200 micrometer.

Negative electrode 1 and positive electrode 3 were wound with a 25 micrometer thick microporous polyethylene membrane separator 5. When the electrodes were wound, the edge of positive electrode 3 was kept 0.5 mm inside of negative electrode **1**. Then the wound electrode was dried under vacuum at 60°C for 12 hr to reduce the water concentration less than 50 ppm. Nickel negative lead tab 2 was attached to the copper foil current collector and another edge of tab 2 was attached to the inside bottom of can 12 before drying. An aluminum positive lead tab 4 was attached to the aluminum foil current collector, and another edge of tab 4 was attached to top 7 before drying. Lithium hexafluorophosphate (LiPF₆) lithium salt dissolved in a non-aqueous solvent comprising a 1:1 (volume to volume) mixture of propylene carbonate (PC) and dimethyl carbonate (DMC) was used as the non-aqueous electrolyte. After the non-aqueous electrolyte was poured into the can, top 7 was crimped to can 12.

### Example 1

SnTiS₃ powder of average particle size of 20 micrometer was used as a negative active material. The resulting battery cell was referred to as Battery A.

### Example 2

PbTiS₃ powder of average particle size of 20 micrometer was used as a negative active material. The resulting battery cell was referred to as Battery B.

### Example 3

The mixture of PbTiO₃ powder of average particle size of 20 micrometer and SnTiS₃ powder of average particle size of 20 micrometer was used as negative active materials. The ratio of PbTiO₃ and SnTiS₃ was 80:20 by weight. The resulting battery cell was referred to as Battery C.

### Example 4

PbTiO₃ powder of average particle size of 20 micrometer had been coated with SnTiS₃ powder by hybridization equipment was used as negative active materials. Hybridization was carried out at 6,000 rpm under an argon atmosphere. SnTiS₃ powder had a feature of average particle size of 3 micrometer. The ratio of PbTiO₃ and SnTiS₃ was 60:40 by weight. The resulting battery cell was referred to as Battery D.

### Example 5

PbTiS_{3-Y}O_{Y} powder of average particle size of 20 micrometer was used as negative active materials. PbTiS_{3-Y}O_{Y} was synthesized by heating a PbTiO₃ and sulfur mixture in sealed crystalline tube under vacuum at 800°C for 5 hr. The resulting battery cell was referred to as Battery E.

### Example 6

The mixture of CaTiO₃ powder with average particle size of 20 micrometer and PbTiS₃ powder with average particle size of 20 micrometer was used as negative active materials. The ratio of CaTiO₃ and PbTiS₃ was 80:20 by weight. The resulting battery cell was referred to as Battery F.

### Example 7

The mixture of SnTiO₃ powder of average particle size of 20 micrometer and PbNbS₃ powder of average particle size of 20 micrometer was used as negative active materials. The ratio of SnTiO₃ and PbNbS₃ was 80:20 by weight. The resulting battery cell was referred to as Battery G.

### Example 8

PbTiS₃-_{Y}O_{Y} powder with average particle size of 20 micrometer as obtained in Example 5 coated with carbon black by hybridization equipment was used as negative active materials. Hybridization was carried out at 6000 rpm under an argon atmosphere. The ratio of PbTiS_{3-Y}O_{Y} and carbon black was 90:10 by weight. The resulting battery cell was referred to as Battery H.

### Example 9

PbTiS_{3-Y}O_{Y} powder with average particle size of 20 micrometer as obtained in Example 5 coated by copper powder with average particle size of 4 micrometer was used as negative active materials. The ratio of PbTiS_{3-Y}O_{Y} and copper was 95:5 by weight. The resulting battery cell was referred to as Battery I.

### Example 10

The negative electrode as same as Example 1 was used with LiPF_{6/}PC+DMC electrolyte including vinylene carbonate. The same conditions and materials without this electrolyte were as same as Example 1. The resulting battery cell was referred to as Battery J.

### Example 11

The negative electrode as same as Example 1 was used with LiPF₆/PC+DMC electrolyte including vinylene carbonate and 1,3-propanesulton. The same conditions and materials without this electrolyte were as in Example 1. The resulting battery cell was referred to as Battery K.

### Comparative Example 1

Graphite powder with average particle size of 20 micrometer was used as negative active material. The resulting battery cell was referred to as Battery L.

### Comparative Example 2

Graphite powder with average particle size of 20 micrometer was used as negative active material. But the electrolyte was only changed to 1mol-LiPF₆/EC+DMC. The ratio of EC/DMC is 50:50 by volume. The resulting battery cell was referred to as Battery M.

### Comparative Example 3

PbTi0₃ powder with average particle size of 20 micrometer was used as negative active material. The resulting battery cell was referred to as Battery N.

The gas evolution on first charging of a cell and self-heat at high temperature were measured by following method using battery cell A-N. Battery cells A-N were charged at 120 mA under 80°C to 4.2V. And then these cells charged to 4.2V were disassembled in non-aqueous propylene carbonate respectively. And generated gases from battery cells were collected in mess cylinder respectively. Battery cells A-N charged at 120mA to 4.2V were prepared to measure the temperature respectively. These battery cell A-N were stored in hot box at 100°C for 5 hr. The temperature of the cell was measured by the thermocouple settled on the surface of battery cell. This differential temperature was considered to cause the self-heating reaction in a cell.

**Table 1**

| **Battery** | **Active Material1** | **Active Material2** | **Conductive material** | **Method** | **Electro lyte** | **Additivies** | **Gas (cm**^{**3**}**)** | **Temp. Change (°C)** |
|---|---|---|---|---|---|---|---|---|
| **A** | **Li**_{**x**}**SnTiS**_{**3**} | **None** | **Carbon Black** | | **PC+DMC** | **None** | **4.1** | **2** |
| **B** | **Li**_{**x**}**PbTiS**_{**3**} | **None** | **Carbon Black** | | **PC+DMC** | **None** | **4.3** | **2** |
| **C** | **Li**_{**x**}**PbTiO**_{**3**} | **Li**_{**x**}**SnTiS**_{**3**} | **Carbon Black** | **Mixture** | **PC+DMC** | **None** | **4.2** | **3** |
| **D** | **Li**_{**x**}**PbTiO**_{**3**} | **Li**_{**x**}**SnTiS**_{**3**} | **Carbon Black** | **Hybridi -zation** | **PC+DMC** | **None** | **4.5** | **2** |
| **E** | **Li**_{**x**}**PbTiS**_{**3-Y**}**O**_{**Y**} | | **Carbon Black** | **Synthesis** | **PC+DMC** | **None** | **3.8** | **2** |
| **F** | **Li**_{**x**}**CaTiO**_{**3**} | **Li**_{**x**}**PbTiS**_{**3**} | **Carbon Black** | **Mixture** | **PC+DMC** | **None** | **4.4** | **2** |
| **G** | **Li**_{**x**}**SnTiO**_{**3**} | **Li**_{**x**}**PbNbS**_{**3**} | **Carbon Black** | **Mixture** | **PC+DMC** | **None** | **4.6** | **2** |
| **H** | **Li**_{**x**}**PbTiS**_{**3-Y**}**O**_{**Y**} | **None** | **Carbon Black** | **Hybridi -zation** | **PC+DMC** | **None** | **4.1** | **2** |
| **I** | **Li**_{**x**}**PbTiS**_{**3-Y**}**O**_{**Y**} | **None** | **Cu Powder** | **Hybridi -zation** | **PC+DMC** | **None** | **3.9** | **1** |
| **J** | **Li**_{**x**}**SnTiS**_{**3**} | **None** | **Carbon Black** | | **PC+DMC** | **VC** | **3.2** | **2** |
| **K** | **Li**_{**x**}**SnTiS**_{**3**} | **None** | **Carbon Black** | | **PC+DMC** | **VC+PS** | **2.9** | **1** |
| | | | | | | | | |
| **L** | **CLi**_{**x**} | **None** | **Carbon Black** | | **PC+DMC** | **None** | **15** | **0** |
| **M** | **CLi**_{**x**} | **None** | **Carbon Black** | | **EC+DMC** | **None** | **7.8** | **20** |
| **N** | **Li**_{**x**}**PbTiO**_{**3**} | **None** | **Carbon Black** | | **PC+DMC** | **None** | **11** | **8** |

As shown in Table 1, batteries A-K, using the negative electrode material of the invention, have smaller amounts of gas produced than those of the Comparative Examples batteries L-N. Though not being bound by any theory or explanation, it is believed that this is caused by the graphite material reacting with solvents of PC (propylene carbonate) and DMC (dimethyl carbonate) on charging. Though not being bound by any theory or explanation, it is believed that the perovskite crystal lattice of PbTiO₃ is oxygen deficient, which causes a reaction with the solvent.

In contrast to batteries L-N, batteries A-K had much less gas evolution. It is believed that, in these batteries which contained a sulfur containing compound, it is difficult to react with the electrolyte because of the difference in electronegativity between oxygen and sulfur. Moreover, this effect was obtained not only with sulfide compounds but also when the sulfide was on the surface of perovskite oxide such as PbTiO₃ (battery E) and with mixtures of sulfide (batteries C,D,F,G). SnNbS₃ and PbVS₃ also show this effect.

Batteries H and I, which used a sulfide surface-coated with a conductive material by hybridization, showed reducing gas evolution. It is believed that the conductive material prevents the negative electrode active material from contacting the electrolyte. Herein the conductive material was carbon black or copper powder. Carbon fiber, transition metal powders, and their spherical, flake and fiber can also be used as the conductive material.

Moreover, batteries J and K, using as additives of vinylene carbonate (VC) and 1,3-propanesulton (PS), show the smallest volume of gas because the passivation film on the surface of the negative electrode active material reduces the contact between the active material and the electrolyte. Passivation films are believed to be formed during the initial charging. Other additives, such as phenyl ethylene carbonate (ph-EC) and vinyl ethylene carbonate (VEC), may also be used.

In Table 1, batteries A-K show smaller temperature changes than those of Comparative Examples M and N. These results indicate batteries A-K produce less heat from exothermic reactions compared with battery cells N and M. Although comparative battery L showed no temperature change, a large amount of gas was generated during the first charge. It is believed that battery cell L could not charge and its coulomb was used to decompose the electrolyte, particularly propylene carbonate (PC). If the graphite reacts with propylene carbonate or 1,2-dimethoxy ethane during charging, the lithium ion can not intercalate the graphite.

Battery cells A-K each generate a small amount of heat (differential temperatures are not zero). It is believed that this heat generation is caused by the carbon black. However, these small temperatures increases should not be a problem. Thus, this invention is expected to improve the reliability and safety of the battery remarkably because the battery cell of this invention shows reduces gas evolution and heat generation compared to graphite.

Other perovskite sulfides and/or oxides may be used in the practice of this invention. The Pb in PbTiO₃, for example, may be replaced with Na, K, Cs, Be, Mg, Ca, Sr, Ba, or a mixture thereof, and Ti in PbTiO₃ may be replaced with V, Cr, Mn, Fe, Co, Ni, Cu, Zr, Nb, Mo, Sn, Pb, Zn, Cd, or a mixture thereof. Also, when the negative electrode active material is a mixture of an oxide and a sulfide, oxide to sulfide ratios other than 80:20 may be used. For example, only a small amount of the sulfide is necessary to produce improved battery performance.

Having described the invention, we now claim the following and their equivalents.

## Claims

1. The negative electrode of a non-aqueous electrolyte secondary battery, the negative electrode comprising:
a current collector; and
a mixture comprising a negative electrode active material, a conductive material, and a binder on the current collector;
in which:
the negative electrode active material has the overall composition:
Li_{X}M¹M²S_{3-y}O_{y};
0≤X≤2, 0≤y<3;
M¹ is selected from the group consisting of alkali metals exclusive of lithium, alkaline earth metals, semi-metals, and mixtures thereof; and
M² is selected from the group consisting of (i) metals exclusive of the alkali metals, the alkaline earth metals, and the semi-metals, and (ii) mixtures thereof.

2. The negative electrode of claim 1 in which:
M¹ is selected from the group consisting of sodium, potassium, magnesium, calcium, strontium, barium, tin, lead, and mixtures thereof; and
M² is selected from the group consisting of titanium, vanadium, chromium, manganese, iron, cobalt, nickel, copper, zirconium, niobium, molybdenum, tin, lead, zinc, cadmium, and mixtures thereof.

3. The negative electrode of claim 2 in which:
M¹ is selected from the group consisting of calcium, tin, lead, and mixtures thereof; and
M² is selected from the group consisting of titanium, niobium, vanadium, iron, and mixtures thereof.

4. The negative electrode of claim 3 in which negative electrode material is coated with the conductive material.

5. The negative electrode of claim 4 in which the conductive material is selected from the group consisting of carbon and transition metals.

6. The negative electrode of claim 1 in which the negative electrode active material is LiₓSnTiS₃.

7. A non-aqueous electrolyte secondary battery comprising:
a positive electrode;
a negative electrode;
a non-aqueous electrolyte between the positive electrode and the negative electrode;
in which:
the non-aqueous electrolyte comprises a non-aqueous solvent and lithium salt;
the positive electrode comprises a positive electrode current collector, and, on the positive electrode current collector, a mixture comprising a positive electrode active material, a first conductive material, and a first binder;
the positive electrode material is a compound capable of occluding and of releasing lithium ions;
the negative electrode comprises a negative electrode current collector, and, on the negative electrode current collector, a mixture comprising a negative electrode active material, a second conductive material, and a second binder;
the negative electrode active material has the overall composition:
Li_{X}M¹M²S_{3-y}O_{y};
0≤X≤2, 0≤Y<3;
M¹ is selected from the group consisting of alkali metals exclusive of lithium, alkaline earth metals, semi-metals, and mixtures thereof; and
M² is selected from the group consisting of (i) metals exclusive of the alkali metals, the alkaline earth metals, and the semi-metals, and (ii) mixtures thereof.

8. The non-aqueous electrolyte secondary battery of claim 7 in which:
M¹ is selected from the group consisting of sodium, potassium, magnesium, calcium, strontium, barium, tin, lead, and mixtures thereof; and
M² is selected from the group consisting of titanium, vanadium, chromium, manganese, iron, cobalt, nickel, copper, zirconium, niobium, molybdenum, tin, lead, zinc, cadmium, and mixtures thereof.

9. The non-aqueous electrolyte secondary battery of claim 8 in which:
M¹ is selected from the group consisting of calcium, tin, lead, iron, and mixtures thereof; and
M² is selected from the group consisting of titanium, niobium, vanadium, and mixtures thereof.

10. The non-aqueous electrolyte secondary battery of claim 9 in which negative electrode material is coated with the second conductive material.

11. The non-aqueous electrolyte secondary battery of claim 10 in which the second conductive material is selected from the group consisting of carbon and transition metals.

12. The non-aqueous electrolyte secondary battery of claim 8 in which the non-aqueous electrolyte comprises an additive selected from the group consisting of vinylene carbonate, phenyl ethylene carbonate, 1,3-propane sultone, vinyl ethylene carbonate, and mixtures thereof

13. The non-aqueous electrolyte secondary battery of claim 8 in which the negative electrode active material is a mixture of materials with the overall composition LiₓM¹M²S_{3-y}O_{y}, in which 0≤X≤2; 0≤y<3.

14. The non-aqueous electrolyte secondary battery of claim 13 in which the negative electrode active material is formed from a mixture of an oxide of the formula M¹M²O₃ and a sulfide of the formula M¹M²S_{3'}

15. The non-aqueous electrolyte secondary battery of claim 14 in which: M¹ is selected from the group consisting of calcium, tin, lead, and mixtures thereof; and M² is selected from the group consisting of titanium, niobium, vanadium, and mixtures thereof.

16. The non-aqueous electrolyte secondary battery of claim 7 in which the negative electrode active material is formed by a process comprising hybridization a mixture of an oxide of the formula M¹M²O₃ and a sulfide of the formula M¹M²S₃.

17. The non-aqueous electrolyte secondary battery of claim 16 in which: M¹ is selected from the group consisting of calcium, tin, lead, and mixtures thereof; and M² is selected from the group consisting of titanium, niobium, vanadium, and mixtures thereof..

18. The non-aqueous electrolyte secondary battery of claim 7 in which the negative electrode active material is LiₓSnTiS₃.

19. The non-aqueous electrolyte secondary battery of claim 7 in which the negative electrode active material is LiₓPbTiS₃.
